# EUROPÄISCHE PATENTSCHRIFT

(11) **EP 2 106 876 B1**
(45) Veröffentlichungstag und Bekanntmachung des Hinweises auf die Patenterteilung: **07.09.2011**
(21) Anmeldenummer: 09152588.1
(22) Anmeldetag: 11.02.2009
(51) Int. Cl.: B23C 3/18, B23P 15/00, B24B 19/14, F01D 5/34, F01D 5/14

(54) **Verfahren zur aerodynamischen Ausformung der Vorderkante von Bliskschaufeln**
Method for aerodynamically shaping the leading edge of blisk blades
Procédé de mise en forme aérodynamique du bord d'attaque d'une aube d'un disque aubage monobloc

(30) Priorität: 04.04.2008 DE 102008017624
(43) Veröffentlichungstag der Anmeldung: 07.10.2009
(73) Patentinhaber: Rolls-Royce Deutschland Ltd & Co KG, 15827 Blankenfelde-Mahlow (DE)
(72) Erfinder: Riedel, Gregor, 63654, Büdingen (DE); Holze, Liane, 61267, Neu-Anspach (DE)

(56) Entgegenhaltungen:
- EP-A- 0 432 703
- EP-A- 1 459 824
- WO-A-00/29171
- WO-A-95/09062
- JP-A- 2003 340 706

## Beschreibung

Die Erfindung betrifft ein Verfahren zur aerodynamischen Ausformung der Vorderkante von aus dem vollen Material mit einem Aufmaß gefrästen und anschließend in einem Schleif- und Polierprozess behandelten Bliskschaufeln. Ein solches Verfahren ist aus der EP 1 459 824 A2 bekannt.

Als Rotoren für Gasturbinentriebwerke werden bekannterma-Ben auch Blisks eingesetzt, bei denen die Laufschaufeln mit der Rotorscheibe integral zu einer eintückigen, eine Einheit bildenden Anordnung verbunden sind. Neben den verminderten Montagekosten zeichnen sich integral beschaufelte Rotoren durch ein geringes Gesicht und verminderte Zentrifugalbelastungen aus. Die Herstellung integral beschaufelter Laufräder erfolgt entweder durch Vierbinden separat gefertigter Schaufelteile mit der Rotorscheibe durch Reibschweißen oder die Laufschaufeln werden aus dem vollen Material eines Scheibenrohlings herausgefrast. Beim Fräsen der Laufschaufeln aus dem vollen Material erfolgt die Fertigbearbeitung der zuvor durch Schruppen vorgeformten Bliskschaufeln durch Punktkontaktfräsen, bei dem ein Fräswerkzeug mit halbkugelförmigem Fräskopf spiralförmig um die gesamte Schaufel herum geführt wird und dabei sowohl die Saug- und Druckseite als auch die Vorderkante und die Hinterkante der schaufel ausformt. Das Fräsen der für die Leistungsfähigkeit der Blisk wichtigen Vorderkante erfolgt mit einem an der Vorderkante gleichmäßig verteilt vorgehaltenen. Aufmaß, das heißt einem nach dem Fräsen an der Vorderkante verbleibenden Materialüberschuss, mit dem einem beim anschlieβenden Gleitschleifen erfolgenden Materialabtrag Rechnung getragen werden soll. Mit diesem Verfahren gelingt es nicht, ein über die gesamte Länge der Schaufel gleichmäßig aerodynamisch geformtes Profil der Schaufelvorderkante zu erzeugen.

Der Erfindung liegt die Aufgabe zugrunde, ein Verfahren zur Ausformung der Vorderkante von aus dem vollen Material gefrästen Bliskschaufeln anzugeben, mit dem über die gesamte Kantenlänge ein konstantes, aerodynamisch ausgebildetes Vorderkantenprofil erzeugt werden kann.

Erfindungsgemäß wird die Aufgabe mit einem verfahren gemäß den Merkmalen des Patentanspruchs 1 gelöst. Vorteilhafte Weiterbildungen der Erfindung ergeben sich aus den Unteransprüchen.

Bei der Herstellung von aus dem vollen Material gefrästen Bliskschaufeln, die nach dem Fräsen noch geschliffen und poliert werden, wird die Vorderkante als elliptisches Profil mit einer Materialaufdickung ausgebildet. Diese Materialaufdickung ist in Form und Größe über die gesamte Länge der Vorderkante so gestaltet, dass sie genau dem beim Schleifen und Polieren der Bliskschaufel an der Vorderkante entfernten Material entspricht. Die Form, Abmessung und Anordnung des durch das Schleifen entfernten Materials, das nach dem Fräsen auf dem elliptischen Profil der Vorderkante bleibt, wird zuvor in Versuchen und mit Hilfe optischer Messverfahren ermittelt. Es wurde gefunden, dass die Materialaufdickung zur Saugseite der Bliskschaufel hin asymmetrisch angeordnet sein muss und die Stärke der Materialaufdickung vom Annulus zur Schaufelspitze hin zunehmen muss. Eine Bliskschaufel mit einer so ausgebildeten asymmetrischen Vorderkantenvorform weist im Ergebnis der Schleif- und Polierbehandlung eine elliptische Vorderkante auf, deren aerodynamisch vorteilhafte Gestaltung die Leistungsfähigkeit der Blisk verbessert. Die Erzeugung des erfindungsgemäß ausgebildeten asymmetrischen Vorprofils der Vorderkante erfolgt durch Flankenfräsen um die Vorderkante herum mit über die Schaufellänge aufeinander folgenden, in Strömungsrichtung ausgerichteten ebenen Frässtreifen. Das Flankenfräsen, wird bleichermaßen entlang der Druck- und Saugseite der Bliskschaufel und um deren Hinterkante herum durchgeführt .

In weiterer Ausbildung der Erfindung kann das asymmetrische Vorprofil auch durch Abteilen der Vorderkante in deren Längsrichtung, und zwar mit einem kugelförmigen Fräskopf durch Erzeugen von mehreren nebeneinaner ausgebildeten, konkav geformten Fräsbahnen erfolgen. Der Radius des Fräskopfes ist vorzugsweise gleich oder kleiner als der Filletradius, so dass mit dem gleichen Fräswerkzeug auch das Fillet der Bliskschaufel abgezeilt werden kann.

Ausführungsbeispiele der Erfindung werden anhand der Zeichnung näher erläutert. Es zeigen:
Fig. 1 eine schematische Darstellung des Flankenfräsens der Vorderkante einer Bliskschaufel;
Fig. 2 eine vergrößerte Darstellung einer elliptischen Schaufelvorderkante während des Flankenfräsens;
Fig. 3. eine schematische Darstellung des Abzeilens in Längsrichtung der Vorderkante einer Bliskschaufel mit einem Gesenkfräser mit halbkugelförmigem Fräskopf ;
Fig. 4 eine Schnittansicht einer elliptischen Schaufelvorderkante während des Abzeilens gemäß Fig. 3; und
Fig. 5 eine Schnittansicht der abgezeilten Schaufelvorderkante vor dem nachfolgenden Schleif-und Polierprozess.

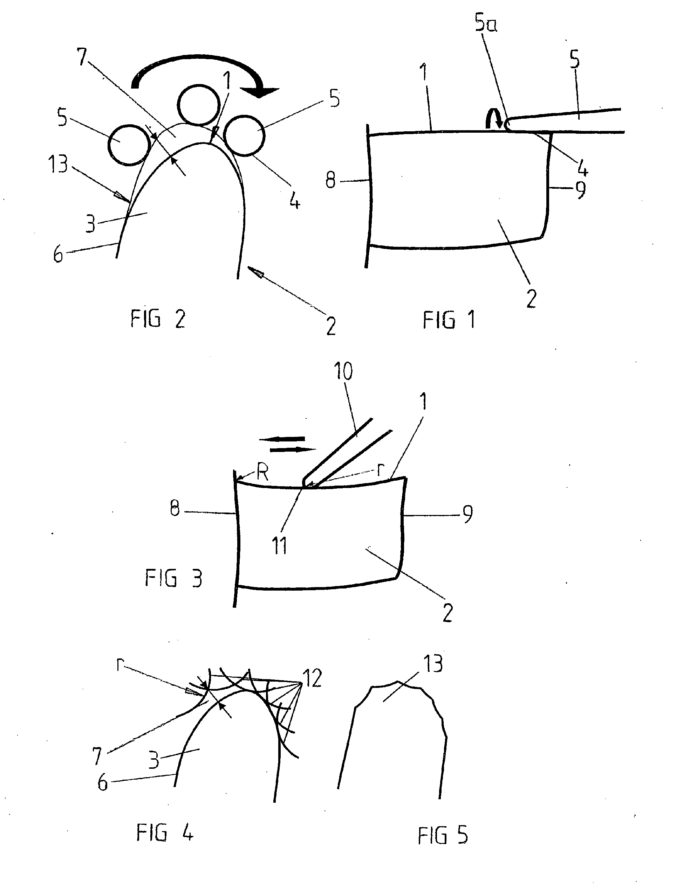

Die Vorderkante 1 der Bliskschaufel 2 soll nach dem Fräsen und Polieren das in den Figuren 2 und 4 dargestellte - aerodynamisch vorteilhaft - elliptische Profil 3 aufweisen. Gemäß den Figuren 1 und 2 wird die Vorderkante 1 mit der Schneidflanke 4 eines einen gerundeten Fräskopf 5a aufweisenden Schaftfräsers 5 gefräst, und zwar über die Schaufellänge in mehreren aufeinander folgenden, in Strömungsrichtung und um die Vorderkante herum verlaufenden Fräsbahnen. Das Umfräsen erfolgt so, dass auf dem vorgesehenen elliptischen Profil 3 der Vorderkante 1 eine zur Saugseite 6 der Bliskschaufel hin asymmetrische Materialaufdickung 7 zurückbleibt, Die nach dem Flankenfräsen zurückbleibende Materialaufdickung 7 entspricht bezüglich der Dimensionierung und Anordnung dem beim anschließenden Gleitschleifen und Polieren der Bliskschaufel an deren, Vorderkante 1 abgetragene - zuvor in Versuchen mit optischen Messsystemen ermittelten - Material, so dass die Vorderkante 1 im Ergebnis des nachfolgenden Schleifens und Polierens ein elliptisches Profil aufweist. Entsprechend dem ermittelten Materialabtrag beim Gleitschleifen und Polieren nimmt die Stärke der asymmetrischen Materialaufdickung 7 über die Länge der Vorderkante 1, das heißt vom Annulus 8 bis zur Schaufelspitze 9 stetig zu und kann in Bereich der größten Materialaufdickung an der Schaufelspitze 0,1 mm betragen.

Das in den Figuren 3 bis 5 wiedergegebene Abzeilen in Längsrichtung der Vorderkante 1, das heißt von der Schaufelspitze 9 zum Annulus 8 oder in umgekehrter Richtung, wird in dem hier dargestellten Ausführungsbeispiel mit einem Gesenkfräser 10 mit halbkugelförmigem Fräskopf 11 durchgerührt. Der Materialabtrag an der Vorderkante 1 derfolgt in mehreren - hier beilspielsweise sechs - rebereirander liegenden Fräsbahnen 12 (Zeilen) mit einem Radius r, der vorzugsweise gleich oder kleiner als der Filletradius R am Übergang zwischen Schaufelblatt und Annulus ist, so dass mit dem gleichen Werkzeug auch die Filletlinien gefräst (abgeteilt) werden können. Die Anzahl der Fräsbahnen 12 hängt aber letztlich vom Werkzeug, der Schaufelgeometrie und den Schleif- und Polierbedingungen ab. wie bei dem anhang der Figuren 1 und 2 erläuterten Flankenfräsen wird das Material auch beim Abteilen so abgetragen, dass gegenüber dem vorgesehenen elliptischen Profil eine asymmtetrische, das heißt zur Saugseite 6 hin verschobene Materialaufdickung 7 entsteht, deren Dicke von der Schaufelspitze 9 zum Annulus 8 hin geringer wird. Die nach dem Abzeilen erzielte Materialaufdickung 7 bzw. das dabei erzeugte asymmetrische Vorprofil/Vorderkantenprofil 143 ist in Form und Größe auf den nachfalgenden Schleif- und Polierprozess abgestimmt, so dass die vorderkante 1 der Bliskschaufel 2 nach dem Schleifen und Polieren das vorgesehene elliptische Profil 3 aufweist.

### Bezugszeichenliste

- 1: Vorderkante
- 2: Bliskschaufel
- 3: Elliptisches Profil
- 4: Schneidfläche
- 5: Schaltfräser
- 5a: gerundeter Fräskopf
- 6: Saugseite
- 7: Materialaufdickung
- 8: Annulus
- 9: Schaufelspitze
- 10: Gesenkfräser
- 11: Halbkugelförmiger Fräskopf
- 12: Fräsbahn
- 13: asymmetrisches Vorprofil/vorderkantenprofil
- R: Filletradius
- r: Radius von 11, 12

## Patentansprüche

1. Verfahren zur aerodynamischen Ausformung der Vorderkante (1) von aus dem vollen Material mit einem Aufmaß gefrästen und anschließen in einem Schleif-und Polierprozess behandelten Bliskschaufeln (2), **dadurch gekennzeichnet, dass** über die gesamte Länge der Vorderkante (1) die Form und die Stärke des Materialabtrags beim Schleifen und Polieren entsprechend den jeweils herrschenden Bedingungen ermitteilt wird und beim Fräsen der Vorderkante ein elliptisches Profil (3.) mit einer Materialaufdickung (7), die in Form und Starke dem ermittelten Materialabtrag entspricht, erzeugt wird.

2. Verfahren nach Anspruch 1, **dadurch gekennzeichnet, dass** die Materialaufdickung (7) zur Saugseite der Bliskschaufel (2) hin asymmetrisch an dem elliptischen Profil angeformt und womit ein asymmetrisches Vorprofil erzeugt wird und die Größe der Materialverdickung vom Annulus zur Schaufelspitze allmählich zunimmt.

3. Verfahren nach Anspruch 2, **dadurch gekennzeichnet, dass** das asymmetrische Vorprofil durch Flankenfräsen um die Vorderkante herum mit über die Schaufellange aufeinander folgenden, in Strömungsrichtung ausgerichteten ebenen Frässtreifen erfolgt.

4. Verfahren nach Anspruch 3, **dadurch gekennzeichnet, dass** das Flankenfräsen gleichermaßen entlang der Druck- und Saugseite und um die Hinterkante der Bliskschaufel herum durchgeführt wird

5. Verfahren nach Anspruch 2, **dadurch gekennzeichnet, dass** das asymmetrische Vorprofil (13) durch Abzeilen mit mehreren in Längsrichtung der Vorderkante nebeneinander verlaufenden konkav geformten Fräsbahnen (12) erzeugt wird.

6. Verfahren nach Anspruch 5, **dadurch gekennzeichnet, dass** das Abseilen mit dem halbkugelförmigen Fräskopf (11) eines Gesenkfräsers (10) durchgeführt wird.

7. Verfahren nach Anspruch 6, **dadurch gekennzeichnet, dass** der Radius (r) des Fräskopfes (11) gleich oder kleiner als der Filletradius (R) der Bliskschaufel ist und mit dem Fräskopf auch das Fillet abgezeilt wird.

## Claims

1. Method for aerodynamically shaping the leading edge (1) of blisk blades (2) machined from the solid with a material allowance and subsequently treated in a grinding and polishing process, **characterized in that** over the entire length of the leading edge (1) the shape and amount of material removal during grinding and polishing is determined in accordance with the specific conditions prevailing in each case, and **in that** an elliptical profile (3) with a material allowance (7), which in shape and amount corresponds to the material removal determined, is produced upon leading edge milling.

2. Method in accordance with Claim 1, **characterized in that** the material allowance (7) is asymmetrically formed at the elliptical profile towards the suction side of the blisk blade (2), thereby producing an asymmetrical pre-profile, and that the amount of material allowance gradually increases from the annulus to the blade tip.

3. Method in accordance with Claim 2, **characterized in that** the asymmetrical pre-profile is produced by flank-milling around the leading edge in plane milling strips following each other over the length of the blade and being oriented in the flow direction.

4. Method in accordance with Claim 3, **characterized in that** flank-milling is similarly accomplished along the pressure and suction side and around the trailing edge of the blisk blade.

5. Method in accordance with Claim 2, **characterized in that** the asymmetrical pre-profile (13) is generated by line-wise milling, thereby producing several, side-by-side, concave milling paths (12) in the longitudinal direction of the leading edge.

6. Method in accordance with Claim 5, **characterized in that** a die cutter (10) with semi-spherical cutter head (11) is used for line-wise milling.

7. Method in accordance with Claim 6, **characterized in that** the radius (r) of the cutter head (11) is equal to or smaller than the fillet radius (R) of the blisk blade, enabling also the fillet to be line-wise milled using the cutter head.

## Revendications

1. Procédé pour le façonnage aérodynamique du bord d'attaque (1) d'aubes BLISK (2) fraisées dans la masse avec une surépaisseur puis traitées dans une opération de meulage et de polissage, **caractérisé en ce que** sur toute la longueur du bord d'attaque (1), la forme et l'épaisseur de l'enlèvement de matière lors du meulage et du polissage sont déterminées en fonction des conditions respectivement en présence, et que lors du fraisage du bord d'attaque est créé un profil elliptique (3) avec une surépaisseur de matière (7) qui, dans sa forme et sa valeur correspond à l'enlèvement de matière déterminé.

2. Procédé selon la revendication n° 1, **caractérisé en ce qu'**en direction du côté aspiration de l'aube BLISK (2), la surépaisseur de matière (7) est façonnée asymétriquement sur le profil elliptique et qu'ainsi est créée une ébauche de profil asymétrique, et la valeur de la surépaisseur de matière augmente progressivement entre la zone annulaire et le bout d'aube.

3. Procédé selon la revendication n° 2, **caractérisé en ce que** l'ébauche de profil asymétrique est obtenue par fraisage sur flanc autour du bord d'attaque selon des bandes de fraisage planes successives sur la longueur de l'aube et orientées dans le sens d'écoulement.

4. Procédé selon la revendication n° 3, **caractérisé en ce que** le fraisage sur flanc est effectué de la même manière le long des côtés refoulement et aspiration et autour du bord de fuite de l'aube BLISK.

5. Procédé selon la revendication n° 2, **caractérisé en ce que** l'ébauche de profil asymétrique (13) est créée par fraisage ligne par ligne selon plusieurs parcours de fraisage (12) de forme concave s'étendant côte à côte dans le sens longitudinal du bord d'attaque.

6. Procédé selon la revendication n° 5, **caractérisé en ce que** le fraisage ligne par ligne est effectué avec la tête de fraisage (11) hémisphérique d'une fraise à matrices (10).

7. Procédé selon la revendication n° 6, **caractérisé en ce que** le rayon (r) de la tête de fraisage (11) est égal ou inférieur au rayon (R) du congé de l'aube BLISK, et que le congé est également fraisé ligne par ligne avec la tête de fraisage.
